(19) Europäisches Patentamt / European Patent Office / Office européen des brevets

(11) **EP 1 676 098 B1**

(12) **FASCICULE DE BREVET EUROPEEN**

(45) Date de publication et mention
de la délivrance du brevet:
**26.09.2007 Bulletin 2007/39**

(21) Numéro de dépôt: **04791495.7**

(22) Date de dépôt: **08.10.2004**

(51) Int Cl.:
*G01D 3/02* *(2006.01)*    *G01D 5/14* *(2006.01)*

(86) Numéro de dépôt international:
**PCT/FR2004/002543**

(87) Numéro de publication internationale:
**WO 2005/036101 (21.04.2005 Gazette 2005/16)**

(54) **DISPOSITIF POUR CORRIGER LES ERREURS D'INTERFERENCES**

EINRICHTUNG ZUR KORREKTUR DER STÖRUNGSFEHLER

DEVICE FOR CORRECTION OF THE INTERFERENCE ERRORS

(84) Etats contractants désignés:
**AT BE BG CH CY CZ DE DK EE ES FI FR GB GR HU IE IT LI LU MC NL PL PT RO SE SI SK TR**

(30) Priorité: **09.10.2003 FR 0311811**

(43) Date de publication de la demande:
**05.07.2006 Bulletin 2006/27**

(73) Titulaire: **Electricfil Automotive**
**01708 Miribel Cedex (FR)**

(72) Inventeurs:
• **DUFOUR, Laurent**
**F-01800 Meximieux (FR)**
• **ANDRIEU, Olivier**
**F-01700 Beynost (FR)**
• **MÖLLER, Rainer**
**F-69970 Chaponnay (FR)**

(74) Mandataire: **Le Cacheux, Samuel L.R. et al**
**Cabinet Beau de Loménie**
**51, Avenue Jean-Jaurès**
**B.P. 7073**
**69301 Lyon Cedex 07 (FR)**

(56) Documents cités:
**WO-A-91/05222      US-A- 4 810 965**

# EP 1 676 098 B1

## Description

La présente invention concerne le domaine technique des capteurs magnétiques sans contact adaptés pour repérer la position d'un mobile évoluant selon un axe de déplacement, de préférence linéaire.

L'objet de l'invention trouve une application particulièrement avantageuse mais non exclusivement dans le domaine des véhicules automobiles en vue d'équiper différents organes à déplacement en particulier linéaire dont la position doit être connue et faisant partie, par exemple, d'une boîte de vitesses automatique, d'une suspension, d'un embrayage piloté, d'une direction assistée, d'un capteur de réglage d'assiette, etc.

Dans l'état de la technique, il existe de nombreux types de capteurs sans contact adaptés pour connaître la position linéaire d'un mobile se déplaçant en translation. Par exemple, le brevet US 4 810 965 décrit un capteur magnétique comportant un circuit magnétique fermé comportant une pièce polaire en forme de U pourvue, entre ses deux extrémités libres, d'un aimant créant une induction magnétique selon une direction perpendiculaire à la surface de la pièce polaire. Une cellule de mesure mobile est montée entre les branches de la pièce polaire pour mesurer la valeur de l'induction magnétique en relation de la surface de la pièce polaire. Une telle cellule mesure ainsi l'intensité de l'induction magnétique de fuite apparaissant entre les deux branches de la pièce polaire, l'intensité de cette induction magnétique de fuite variant à la surface de la pièce polaire selon l'axe de translation de la cellule de mesure. Un tel capteur comporte également des moyens de traitement du signal de sortie délivré par la cellule de mesure afin de déterminer la position linéaire du mobile le long de l'axe de translation.

Dans certaines applications, par exemple pour un embrayage piloté, il apparaît le besoin de connaître la position linéaire de mobiles se déplaçant à proximité l'un de l'autre. La position linéaire de chaque mobile peut alors être déterminée à l'aide d'un capteur magnétique de mesure tel que décrit ci-dessus.

La Déposante a eu le mérite de constater que la mesure effectuée par un capteur magnétique était perturbée par l'autre capteur magnétique. En d'autres termes, la Déposante a constaté des erreurs d'interférences pour une installation de mesure comportant au moins deux capteurs magnétiques de mesure de la position de mobiles évoluant selon des trajectoires voisines de déplacement.

L'objet de l'invention vise donc à remédier aux erreurs d'interférences apparaissant pour une telle installation de mesure. A cet effet, l'objet de l'invention vise à proposer un dispositif pour corriger les erreurs d'interférences pour une installation de mesure comportant :

- au moins deux capteurs magnétiques de mesure de la position de mobiles évoluant selon des trajectoires de déplacement voisines, chaque capteur magnétique de mesure délivrant un signal de mesure représentatif de la position du mobile dans un circuit magnétique ouvert,
- et des moyens de traitement des signaux de mesure délivrés par les capteurs magnétiques de mesure.

Selon l'invention, les moyens de traitement comportent des moyens de correction des signaux magnétiques de mesure pour tenir compte des erreurs d'interférences entre les capteurs magnétiques voisins en vue d'obtenir un signal de mesure corrigé pour chaque capteur magnétique de mesure.

Avantageusement, les moyens de correction corrigent le signal de mesure de chaque capteur magnétique de mesure en fonction de la valeur des signaux de mesure du capteur magnétique de mesure considéré et des autres capteurs magnétiques de mesure.

Selon une caractéristique de l'invention, les moyens de traitement délivrent pour chaque capteur magnétique de mesure, un signal de mesure corrigé tel que :

$$S_{1c} = \sum_{i-1}^{n} \left( \sum_{j=0}^{i} \alpha_{ij} \, S_1^{\,j} \, S_2^{\,i-j} \right)$$

$$S_{2c} = \sum_{i=1}^{n} \left( \sum_{j=0}^{i} \alpha'_{ij} \, S_2^{\,j} \, S_1^{\,i-j} \right)$$

avec : $\alpha$, $\alpha'$ : coefficients de correction et $n$ : ordre de la correction.

Selon une variante de réalisation, les moyens de traitement délivrent pour chaque capteur magnétique de mesure, un signal de mesure corrigé tel que pour un ordre de correction de $n = 3$, les $\alpha$, $i$, $j$ et $\alpha'$, sont tels que :
$\alpha_{10} = a-c$ , $\alpha_{11} = 1+c$

2

$\alpha'_{10} = a'-c'$ , $\alpha'_{11} = 1+c'$

$\alpha_{20} = 0 = \alpha'_{20}$ , $\alpha_{21} = \alpha'_{21}= 0$ , $\alpha_{22} = \alpha'_{22} = 0$

$\alpha_{30} = -b$ , $\alpha_{31} = 3b$ , $\alpha_{32} = -3b$ , $\alpha_{33} = b$

$\alpha_{30} = -b'$ , $\alpha'_{31} = 3b'$ , $\alpha'_{32} = -3b'$ , $\alpha'_{33} = b'$

avec a, b, c, a', b', c' : coefficients de correction de sorte que :

$$S_{1c} = (1 + c) S_1 + (a - c) S_2 + 3bS_1 S_2{}^2 - 3bS_1{}^2 S_2 + bS_1{}^3 - bS_2{}^3$$

$$S_{2c} = (1 + c') S_2 + (a' - c') S_1 + 3b'S_2 S_1{}^2 - 3b'S_2{}^2 S_1 + b'S_2{}^3 - b'S_1{}^3$$

ou soit :

$$S_{1c} = S_1 + aS_2 + b (S_1 - S_2)^3 + c (S_1 - S_2)$$

et

$$S_{2c} = S_2 + a'S_1 + b' (S_2 - S_1)^3 + c' (S_2 - S_1)$$

Selon une autre variante dé réalisation, les moyens de traitement délivrent pour chaque capteur magnétique de mesure, un signal de mesure corrigé tel que pour un ordre de correction n = 1, les valeurs de $\alpha$, $\alpha'$, i, j sont tels que $\alpha_{10} = a$, $\alpha_{11} = 1$ et $\alpha'_{10} = a'$, $\alpha'_{11} = 1$ de sorte que :

$$S_{1c} = S_1 + a\, S_2 , \quad et \quad S_{2c} = S_2 + a'S_1$$

Avantageusement, chaque signal de mesure $S_1$, $S_2$ est tel que

$$S_1 = \frac{S_a - S_b}{S_a + S_b}$$

$$S_2 = \frac{S_d - S_c}{S_d + S_c}$$

avec $S_a$, $S_b$, et $S_c$, $S_d$, un couple de signaux élémentaires de mesure délivrés par une paire de cellules de mesure montées dans le circuit magnétique ouvert.

Un autre objet de l'invention est de proposer une installation de mesure comportant :

- un premier capteur magnétique de mesure délivrant un premier signal de mesure de la position d'un premier mobile évoluant selon une trajectoire de déplacement, la valeur du premier signal de mesure dépendant de la position dudit mobile dans un circuit magnétique ouvert,
- au moins un deuxième capteur magnétique de mesure délivrant un deuxième signal magnétique de mesure de la position d'un deuxième mobile évoluant selon une trajectoire de déplacement voisine de la trajectoire de déplacement du premier mobile, la valeur du deuxième signal de mesure dépendant de la position dudit mobile dans un circuit magnétique ouvert,
- et un dispositif de correction conforme à l'invention.

**EP 1 676 098 B1**

Un autre objet de l'invention est de proposer un capteur magnétique sans contact adapté pour déterminer la position d'un mobile, en étant de conception simple, économique et pouvant fonctionner avec un large entrefer.

Ainsi, chaque capteur magnétique de mesure de l'installation conforme à l'invention, comporte des moyens de création d'un flux magnétique selon une direction perpendiculaire à la surface d'au moins une pièce polaire à partir de laquelle apparaît un flux magnétique de fuite dont l'intensité varie à la surface de la pièce polaire selon l'axe de déplacement, ces moyens de création d'un flux magnétique étant montés déplaçables par le mobile en délimitant au moins un entrefer avec une pièce polaire faisant partie du circuit magnétique ouvert, chaque capteur magnétique de mesure comportant au moins une cellule de mesure montée de manière fixe dans le circuit magnétique à proximité d'un point extrême de la trajectoire de déplacement de manière à mesurer le flux magnétique délivré par les moyens de création diminués d'un flux magnétique de fuite apparaissant à partir de la pièce polaire et variant selon la trajectoire de déplacement.

Par exemple, les moyens de création d'un flux magnétique des deux capteurs de mesure sont montés à proximité selon des trajectoires de déplacement parallèles.

Selon une variante préférée de réalisation, le capteur magnétique comporte une deuxième cellule de mesure montée de manière fixe dans le circuit magnétique à proximité de l'autre point extrême de déplacement de manière à mesurer le flux magnétique délivré par les moyens de création diminué du flux magnétique de fuite.

Avantageusement, les moyens de création du flux magnétique sont montés déplaçables en translation.

Avantageusement, les moyens de création du flux magnétique sont constitués par un élément de forme annulaire ou de disque, aimanté radialement ou axialement dont l'axe est parallèle à l'axe de translation.

Selon une autre forme de réalisation, les moyens de création du flux magnétique sont constitués par une série d'au moins quatre aimants dont les directions d'aimantation sont décalées deux à deux de 90°.

Selon une autre forme de réalisation, les moyens de création du flux magnétique sont réalisés par au moins un aimant dont la direction d'aimantation est parallèle à l'axe de translation.

Selon certaines applications, le circuit magnétique ouvert comporte une deuxième pièce polaire disposée en regard de la première pièce polaire en délimitant avec cette dernière un entrefer.

Selon cette variante de réalisation la deuxième pièce polaire est pourvue des moyens de création du flux magnétique.

Par exemple, cette deuxième pièce polaire est formée par un élément tubulaire équipé de l'élément annulaire aimanté radialement.

Avantageusement, l'une ou l'aùtre des pièces polaires possède(nt) un profil plan adapté pour améliorer la linéarité du signal de sortie délivré par les cellules de mesure.

Diverses autres caractéristiques ressortent de la description faite ci-dessous en référence aux dessins annexés qui montrent, à titre d'exemples non limitatifs, des formes de réalisation de l'objet de l'invention.

**La Figure 1** est une vue schématique d'une installation de mesure mettant en oeuvre un dispositif de correction conforme à l'invention.

**Les Figures 2** et **3** sont des graphiques illustrant un aspect de l'invention.

**La Figure 4** est une vue schématique montrant le principe d'un capteur mis en oeuvre dans le cadre de l'invention.

**La Figure 5** est une vue schématique en perspective montrant une variante préférée de réalisation du capteur utilisé.

**Les Figures 6** et **7** sont des vues en perspective montrant diverses formes de réalisation des moyens de création d'un flux magnétique.

**Les Figures 8** et **9** illustrent deux variantes de réalisation de profil de pièces polaires pouvant être mises en oeuvre par un capteur dans le cadre de l'invention.

**Les Figures 10** et **11** sont des vues en perspective de deux variantes de réalisation du capteur dans le cadre de l'invention.

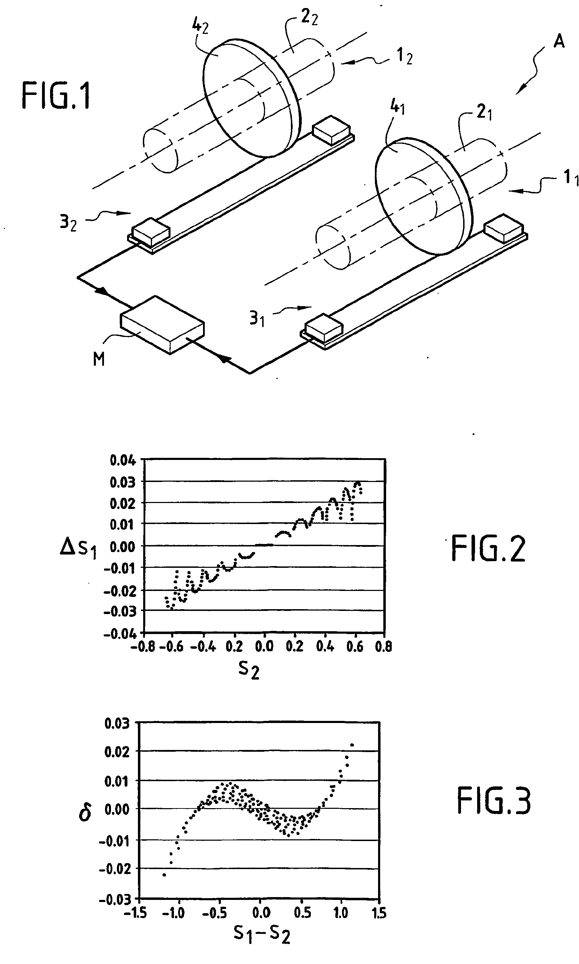

Tel que cela apparaît plus précisément à la **Fig. 1,** l'objet de l'invention concerne un dispositif pour corriger les erreurs d'interférences pour une installation de mesure A comportant au moins deux capteurs magnétiques $1_1$, $1_2$ adaptés pour mesurer chacun la position d'un mobile respectivement $2_1$, $2_2$ évoluant selon des trajectoires de déplacement voisines. Chaque capteur magnétique $1_1$, $1_2$ comporte un circuit magnétique ouvert $3_1$, $3_2$ et délivre un signal de mesure représentatif de la position du mobile $2_1$, $2_2$ dans ledit circuit magnétique ouvert. Cette installation de mesure A comporte également des moyens de traitement **M** des signaux de mesure $S_1$, $S_2$ délivrés respectivement par les capteurs magnétiques $1_1$, $1_2$.

Conformément à l'invention, les moyens de traitement **M** comportent des moyens de correction des signaux magnétiques de mesure $S_1$, $S_2$ pour tenir compte des erreurs d'interférences entre les capteurs magnétiques voisins $1_1$, $1_2$ en vue d'obtenir un signal de mesure corrigé $S_{1c}$, $S_{2c}$ pour chaque capteur magnétique de mesure. En effet, il a été constaté que la mesure réalisée par un capteur est perturbée par la présence de l'autre capteur et réciproquement. L'objet de l'invention vise donc à corriger les signaux magnétiques de mesure $S_1$, $S_2$ pour tenir compte de l'interférence entre les capteurs.

Selon une caractéristique avantageuse de réalisation, les moyens de correction corrigent le signal de mesure $S_1$, $S_2$ de chaque capteur magnétique de mesure en fonction de la valeur des signaux de mesure du capteur magnétique de mesure considéré et des autres capteurs magnétiques de mesure. En effet, il a été constaté que l'intensité de la perturbation créée par un capteur dépend de la valeur prise par ledit capteur et de la valeur prise par l'autre capteur. Ainsi, par exemple dans le cas de la mesure de la position linéaire de deux mobiles voisins, la mesure réalisée par le capteur $1_1$ est perturbée par la présence du mobile $2_2$ auquel est associé le capteur $1_2$. Cette perturbation dépend de la position du mobile $2_2$. Par ailleurs, pour une position donnée du mobile $2_2$, la perturbation dépend également de la position du mobile $2_1$. Inversement, la mesure réalisée par le capteur $1_2$ est perturbée par la présence du mobile $2_1$ auquel est associé le capteur $1_1$. Cette perturbation dépend de la position donnée du mobile $2_1$. Par ailleurs, pour une position donnée du mobile $2_1$, la perturbation dépend également de la position du mobile $2_2$.

Pour une installation de mesure **A,** il est possible de déterminer l'erreur sur le signal de mesure $S_1$ en fonction du signal de mesure $S_2$. Le graphique de la **Fig. 2** représente cette erreur $\Delta$ sur le signal de mesure $S_1$ en fonction du signal de mesure $S_2$. Il ressort de ce graphique que l'erreur $\Delta S_1$ est globalement une fonction linéaire du signal de mesure $S_2$. Il est ainsi possible, en connaissant les signaux de mesure $S_1$, $S_2$ de définir un signal de mesure corrigé pour le capteur $1_1$ tel que $S_{1c} = S_1 + a\,S_2$.

De même, il est possible de définir un signal de mesure corrigé pour le capteur $1_2$ tel que $S_{2c} = S_2 + a'\,S_1$, avec a, a' des coefficients de correction.

Il est à noter qu'un tel signal corrigé $S_{1c}$, $S_{2c}$ reste entaché d'erreurs en raison de l'approximation linéaire de la correction apportée (correction d'ordre n = 1).

Le résidu d'erreur $\delta$ après cette correction d'ordre 1 est représenté à la **Fig. 3,** en fonction de la différence des signaux $S_1 - S_2$. Ce résidu d'erreur peut, par exemple, être approximé par un polynôme d'ordre 3 sur $(S_1 - S_2)$ dont les coefficients des exposants pairs sont nuls. Ainsi, il est possible, pour un ordre de correction d'ordre 3 (n = 3) de calculer un signal corrigé tel que :

$$S_{1c} = (1 + c)\, S_1 + (a - c)\, S_2 + 3bS_1\, S_2^2 - 3bS_1^2\, S_2 + bS_1^3 - bS_2^3$$

et

$$S_{2c} = (1 + c')\, S_2 + (a' - c')\, S_1 + 3b'S_2\, S_1^2 - 3b'S_2^2\, S_1 + b'S_2^3 - b'S_1^3$$

ou soit:

$$S_{1c} = S_1 + aS_2 + b\,(S_1 - S_2)^3 + c\,(S_1 - S_2)$$

et

$$S_{2c} = S_2 + a'S_1 + b'\,(S_1 - S_2)^3 + c'\,(S_2 - S_1)$$

avec b, c, b', c' des coefficients de correction.

D'une manière générale, il peut être défini, pour chaque capteur de mesure, un signal de mesure corrigé tel que :

$$S_{1c} = \sum_{i-1}^{n} \left( \sum_{j=0}^{i} \alpha_{ij}\, S_1^{\,j}\, S_2^{\,i-j} \right)$$

$$S_{2c} = \sum_{i=1}^{n} \left( \sum_{j=0}^{i} \alpha'_{ij} S_2^{\,j} S_1^{\,i-j} \right)$$

avec : $\alpha$, $\alpha'$ : coefficients de correction et n : ordre de la correction.

Pour un ordre de correction d'ordre 3 (n = 3), les $\alpha$, i, j et $\alpha'$ sont tels que :

$\alpha_{10} = a\text{-}c$ , $\alpha_{11} = 1\text{+}c$

$\alpha'_{10} = a'\text{-}c'$ , $\alpha'_{11} = 1\text{+}c'$

$\alpha_{20} = 0 = \alpha'_{20}$ , $\alpha_{21} = \alpha'_{21} = 0$ , $\alpha_{22} = \alpha'_{22} = 0$

$\alpha_{30} = \text{-}\,b$ , $\alpha_{31} = 3b$ , $\alpha_{32} = \text{-}\,3b$ , $\alpha_{33} = b$

$\alpha'_{30} = \text{-}\,b'$ , $\alpha'_{31} = 3b'$ , $\alpha'_{32} = \text{-}\,3b'$ , $\alpha'_{33} = b'$

de sorte que :

$$S_{1c} = (1 + c)\,S_1 + (a - c)\,S_2 + 3bS_1\,S_2^{\,2} - 3bS_1^{\,2}\,S_2 + bS_1^{\,3} - bS_2^{\,3}$$

$$S_{2c}\dot{} = (1 + c')\,S_2 + (a' - c')\,S_1 + 3b'S_2\,S_1^{\,2} - 3b'S_2^{\,2}\,S_1 + b'S_2^{\,3} - b'S_1^{\,3}$$

ou soit:

$$S_{1c} = S_1 + aS_2 + b\,(S_1 - S_2)^3 + c\,(S_1 - S_2)$$

et

$$S_{2c} = S_2 + a'S_1 + b'\,(S_2 - S_1)^3 + c'\,(S_2 - S_1)$$

Pour un ordre 1 de correction, les valeurs de $\alpha$, i, j et $\alpha'$ sont tels que :

$\alpha_{10} = a \; \alpha_{11} = 1 \; \alpha'_{10} = a' \; \alpha'_{11} = 1$

Il ressort de la description qui précède que les moyens de traitement des signaux permettent de corriger les erreurs d'interférences pour une installation de mesure **A** comportant deux capteurs magnétiques de mesure de la position de mobiles $2_1$, $2_2$ se déplaçant à proximité. Bien entendu, l'objet de l'invention peut être appliqué pour une installation de mesure **A** comportant plus de deux capteurs magnétiques de mesure.

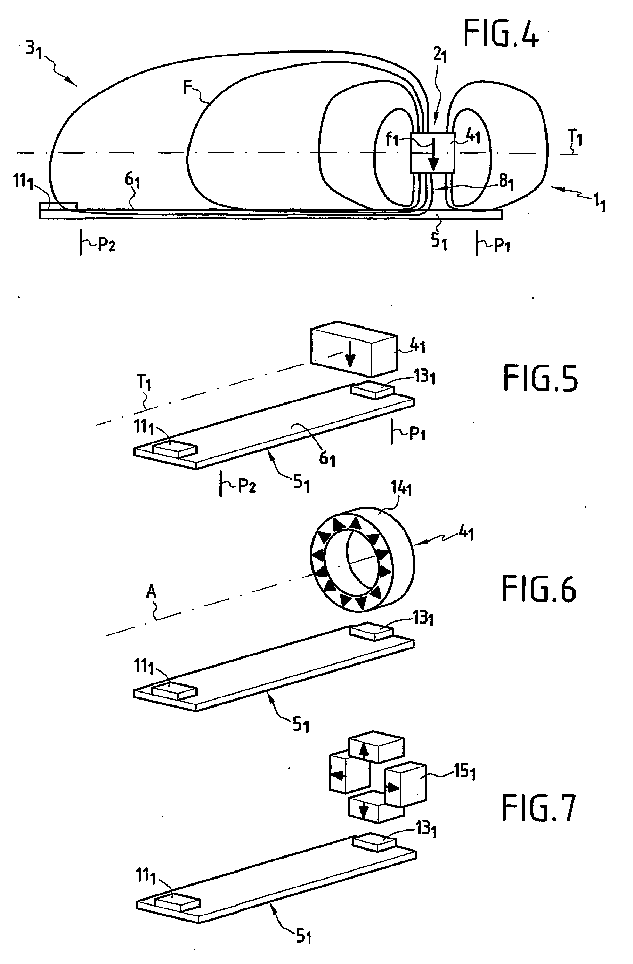

Chaque capteur magnétique $1_1$, $1_2$ peut être réalisé de toute manière connue pour mesurer la position d'un mobile évoluant selon une trajectoire donnée. **La Fig. 4** illustre un exemple préféré de réalisation d'un capteur magnétique $1_1$ adapté pour déterminer la position d'un mobile $2_1$ au sens général se déplaçant selon un axe de déplacement $T_1$ qui dans l'exemple illustré est un axe de translation. Le mobile $2_1$ est constitué par tout type d'organes ayant dans l'exemple illustré une course linéaire faisant partie, de préférence, mais non exclusivement, d'un dispositif équipant un véhicule automobile. Dans la suite de la description, le mobile $2_1$ est considéré comme ayant une course linéaire mais il est clair que l'objet de l'invention peut s'appliquer pour un mobile $2_1$ ayant une course de déplacement différente par exemple circulaire. D'une manière générale, le mobile $2_1$ évolue selon l'axe de déplacement $T_1$ entre deux points extrêmes notés $P_1$ et $P_2$ dans l'exemple illustré à la **Fig. 4.**

Le capteur $1_1$ comprend un circuit magnétique fixe $3_1$ comportant des moyens $4_1$ de création d'un flux magnétique qui, dans l'exemple illustré, est dirigé selon une direction $f_1$ perpendiculaire à l'axe de translation $T_1$. Le circuit magnétique $3_1$ comporte également au moins une première pièce polaire $5_1$ présentant une surface $6_1$ s'étendant sensiblement perpendiculairement à la direction $f_1$ du flux magnétique et parallèlement à l'axe de translation $T_1$.

Les moyens $4_1$ de création du flux magnétique sont montés déplaçables par le mobile $2_1$ en délimitant avec la première pièce polaire $5_1$ un entrefer $8_1$. De préférence, les moyens de création du flux magnétique $4_1$ sont constitués par un aimant faisant partie ou rapporté de toute manière appropriée sur le mobile $2_1$ dont la position est à déterminer selon l'axe de déplacement $T_1$. L'aimant $4_1$ délivre ainsi un flux magnétique orienté perpendiculairement à la surface

$6_1$ de la première pièce polaire $5_1$. Il est à noter qu'il peut être obtenu un flux magnétique orienté perpendiculairement à la surface $6_1$ de la première pièce polaire $5_1$ avec un aimant dont la direction d'aimantation est parallèle à l'axe de translation.

Il est à considérer que la pièce polaire $5_1$ présente une longueur au moins égale à la course à mesurer du mobile $2_1$ déterminée entre les points extrêmes $P_1$ et $P_2$. Par ailleurs, comme cela ressortira de la description qui suit, la première pièce polaire $5_1$ est réalisée dans un matériau adapté pour limiter l'effet d'hystérésis et selon des dimensions appropriées pour ne pas atteindre sa valeur de saturation magnétique.

Le capteur $1_1$ comporte au moins une première cellule de mesure $11_1$ montée dans le circuit magnétique $3_1$ et apte à mesurer la valeur du flux magnétique en relation de la première pièce polaire $5_1$. Une telle cellule de mesure $11_1$ comme par exemple une cellule à effet hall est apte à mesurer, à une position déterminée fixe, les variations de la valeur du flux magnétique circulant dans le circuit magnétique. Dans l'exemple illustré à la **Fig. 4,** la cellule de mesure $11_1$ est montée à proximité d'un point extrême de déplacement $P_2$. Plus précisément la cellule de mesure $11_1$ est montée en dehors de la course du mobile $2_1$ et à proximité d'un point extrême de déplacement.

Il doit être compris que la cellule $11_1$ mesure le flux magnétique délivré par l'aimant $4_1$ diminué du flux magnétique de fuite dont certaines lignes de champ **F** ont été représentées à la **Fig. 4**. La cellule $11_1$ mesure ainsi le flux magnétique résiduel à une extrémité de déplacement, ce flux magnétique résiduel étant égal au flux total de l'aimant $4_1$ diminué du flux magnétique de fuite direct entre le circuit magnétique $3_1$ et l'aimant $4_1$. Dans la mesure où le flux de fuite dépend de façon monotone de la position relative entre l'aimant $4_1$ et la cellule $11_1$, le signal de sortie délivré par la cellule $11_1$ donne une information de la position de l'aimant $4_1$, et par suite du mobile $2_1$ selon l'axe de translation $T_1$. Bien entendu, la mesure est possible si le circuit magnétique et en particulier la pièce polaire $5_1$ n'est pas saturée. Le signal de sortie délivré par la cellule de mesure $11_1$ est transmis à des moyens de traitement du signal, tels que décrits ci-avant, permettant de déterminer la position linéaire du mobile $2_1$ le long de l'axe de déplacement $T_1$.

Selon une caractéristique préférée de réalisation, le capteur $1_1$ comporte une deuxième cellule de mesure $13_1$ montée de manière fixe dans le circuit magnétique $3_1$ à proximité de l'autre point extrême, à savoir $P_1$ dans l'exemple illustré à la **Fig. 5**. Comme expliqué ci-dessus, les cellules $11_1$ et $13_1$ sont placées en dehors de la course délimitée entre les points $P_1$ et $P_2$. Cette deuxième cellule de mesure $13_1$ est apte également à mesurer le flux magnétique délivré par l'aimant $4_1$ diminué du flux magnétique de fuite. Il est à noter que dans les exemples illustrés, les cellules de mesure $11_1$, $13_1$ sont fixées sur la pièce polaire $5_1$. Bien entendu, les cellules de mesure $11_1$, $13_1$ peuvent être placés à proximité des points extrêmes $P_1$ et $P_2$ sans être en contact direct avec la pièce polaire $5_1$.

La réalisation d'un capteur magnétique $1_1$ comportant deux cellules de mesure $11_1$, $13_1$ permet d'obtenir une structure différentielle de mesure en vue d'améliorer la linéarité du signal de sortie $S_a$, $S_b$ des cellules de mesure.

Selon une caractéristique de réalisation, il peut être envisagé que les moyens de traitement calculent, pour déterminer la position du mobile $2_1$, la différence entre les signaux de sortie $S_a$, $S_b$ délivrés par la première $11_1$ et la deuxième $13_1$ cellules de mesure, divisée par la somme des signaux de sortie délivrés par la première $11_1$ et la deuxième $13_1$ cellules de mesure. Soit $S_1 = S_a - S_b / S_a + S_b$ avec $S_a$, $S_b$ les signaux élémentaires de mesure délivrés par la paire de cellules de mesure $11_1$, $11_3$. Un tel traitement permet d'obtenir un signal de sortie qui est peu sensible aux dérives des signaux délivrés par les cellules $11_1$, $13_1$ dues par exemple à des variations d'entrefer ou de température.

Dans l'exemple illustré aux **Fig. 4** et 5, les moyens de création d'un flux magnétique $4_1$ sont réalisés par l'intermédiaire d'un aimant dont la direction d'aimantation est perpendiculaire à la surface $6_1$ de la première pièce polaire $5_1$. Dans le cas où le mobile $2_1$ subit également une rotation selon l'axe $T_1$, il peut être envisagé de réaliser, comme illustré à la **Fig. 6,** les moyens de création du flux magnétique $4_1$ par l'intermédiaire d'un élément annulaire $14_1$ ou en forme de disque aimanté radialement dont l'axe $A_1$ est parallèle à l'axe de déplacement $T_1$. Dans l'exemple illustré à la **Fig. 7,** Les moyens $4_1$ de création du flux magnétique sont constitués par une série d'au moins quatre aimants $15_1$ dont les directions d'aimantation sont décalées deux à deux de 90°.

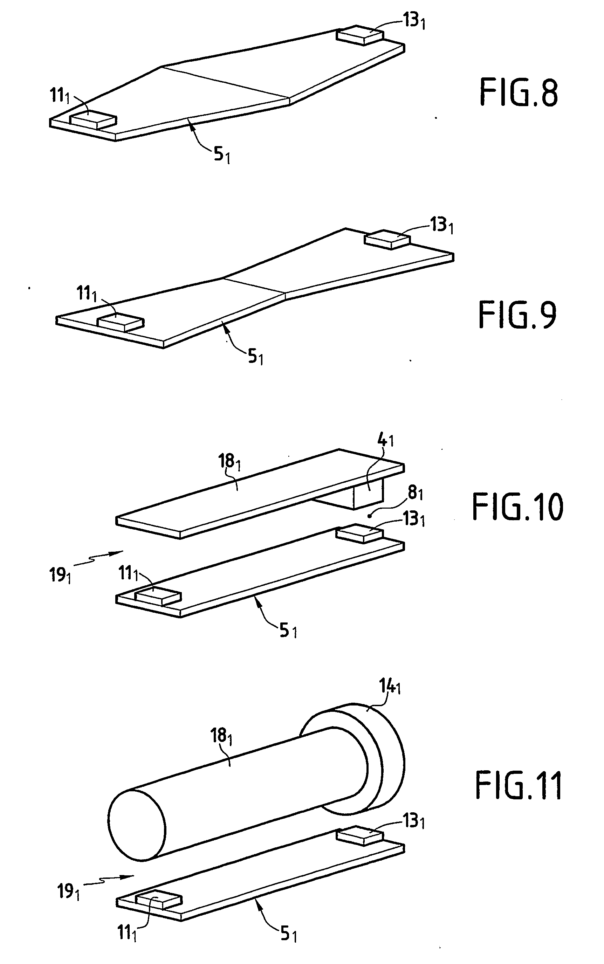

Selon une caractéristique avantageuse illustrée plus précisément aux **Fig. 8** et 9, la pièce polaire $5_1$ peut posséder un profil plan adapté pour améliorer la linéarité du signal de sortie délivré par les cellules de mesure $11_1$, $13_1$. Par exemple, la pièce polaire $5_1$ peut présenter une surface symétrique constituée par deux troncs de cône montés tête bêche avec leurs plus grandes bases jointives (**Fig. 8**) ou avec leurs petites bases jointives (**Fig. 9**).

La **Fig. 10** illustre une autre variante de réalisation du capteur mettant en oeuvre une deuxième pièce polaire $18_1$ identique ou non à la première pièce polaire $5_1$ permettant de limiter les fuites magnétiques, c'est-à-dire permettant de canaliser le flux magnétique dans le circuit magnétique $3_1$. Dans l'exemple illustré à la **Fig. 10**, la deuxième pièce polaire $18_1$ comporte une surface plane disposée en regard de la première pièce polaire $5_1$ en délimitant avec cette dernière un entrefer $19_1$ à l'une de son extrémité. L'autre extrémité de cette deuxième pièce polaire $18_1$ est équipée de l'aimant $4_1$ qui délimite également un entrefer réduit $8_1$ avec la première pièce polaire $5_1$.

La **Fig. 11** illustre une autre forme de réalisation de la deuxième pièce polaire $18_1$ réalisée par un élément tubulaire sur lequel est monté l'élément annulaire aimanté radialement $14_1$ tel qu'illustré à la **Fig. 6**. Cette deuxième pièce polaire $18_1$ délimite également un entrefer $19_1$ avec la première pièce polaire $5_1$.

Dans la description qui précède, seul le capteur $1_1$ a été décrit précisément. Bien entendu, le deuxième capteur

$1_2$ qui peut être réalisé de la même manière que le capteur $1_1$ ne sera pas décrit plus en détail dans la mesure où il comporte les mêmes éléments constitutifs avec un indice 2 en lieu et place de l'indice 1. Le deuxième capteur $1_2$ délivre ainsi deux signaux élémentaires de mesure $S_c$, $S_d$.

L'invention n'est pas limitée aux exemples décrits et représentés car diverses modifications peuvent y être apportées sans sortir de son cadre comme défini dans les revendications.

**Revendications**

1.  Dispositif pour corriger les erreurs d'interférences pour une installation de mesure (**A**) comportant :

    • au moins deux capteurs magnétiques ($1_1$, $1_2$) de mesure de la position de mobiles ($2_1$, $2_2$) évoluant selon des trajectoires de déplacement voisines, chaque capteur magnétique de mesure ($S_1$, $S_2$) délivrant un signal de mesure représentatif de la position du mobile dans un circuit magnétique ouvert ($3_1$, $3_2$),
    • et des moyens de traitement (**M**) des signaux de mesure délivrés par les capteurs magnétiques de mesure,

    **caractérisé en ce que** les moyens de traitement (**M**) comportent des moyens de correction des signaux magnétiques de mesure pour tenir compte des erreurs d'interférences entre les capteurs magnétiques voisins ($1_1$, $1_2$) en vue d'obtenir un signal de mesure corrigé ($S_{1c}$, $S_{2c}$) pour chaque capteur magnétique de mesure.

2.  Dispositif selon la revendication 1, **caractérisé en ce que** les moyens de correction corrigent le signal de mesure ($S_1$, $S_2$) de chaque capteur magnétique ($1_1$, $1_2$) de mesure en fonction de la valeur des signaux de mesure du capteur magnétique de mesure considéré et des autres capteurs magnétiques de mesure.

3.  Dispositif selon la revendication 1 ou 2, **caractérisé en ce que** les moyens de traitement (**M**) délivrent pour chaque capteur magnétique de mesure, un signal de mesure corrigé tel que :

$$S_{1c} = \sum_{i=1}^{n} \left( \sum_{j=0}^{i} \alpha_{ij}\, S_1{}^j\, S_2{}^{i-j} \right)$$

$$S_{2c} = \sum_{i=1}^{n} \left( \sum_{j=0}^{i} \alpha'_{ij}\, S_2{}^j\, S_1{}^{i-j} \right)$$

    avec : $\alpha$, $\alpha'$ : coefficients de correction
    et n : ordre de la correction.

4.  Dispositif selon la revendication 3, **caractérisé en ce que** les moyens de traitement (**M**) délivrent pour chaque capteur magnétique de mesure ($1_1$, $1_2$), un signal de mesure corrigé tel que pour un ordre de correction de n = 3, les $\alpha$, i, j et $\alpha'$, sont tels que :
    $\alpha_{10}$ = a-c , $\alpha_{11}$ = 1+c
    $\alpha'_{10}$ = a'-c' , $\alpha'_{11}$ = 1+c'
    $\alpha_{20}$ = 0 = $\alpha'_{20}$ , $\alpha_{21}$ = $\alpha_{21}$ = 0 , $\alpha_{22}$ = $\alpha'_{22}$ = 0
    $\alpha_{30}$ = - b , $\alpha_{31}$ = 3b , $\alpha_{32}$ = - 3b , $\alpha_{33}$ = b
    $\alpha'_{30}$ = - b' , $\alpha'_{31}$ = 3b' , $\alpha'_{32}$ = - 3b' , $\alpha'_{33}$ = b'
    avec a, b, c, a', b', c' : coefficients de correction de sorte que :

$$S_{1c} = (1 + c)\, S_1 + (a - c)\, S_2 + 3bS_1 S_2{}^2 - 3bS_1{}^2 S_2 + bS_1{}^3 - bS_2{}^3$$

$$S_{2c} = (1 + c')\, S_2 + (a' - c')\, S_1 + 3b'S_2 S_1{}^2 - 3b'S_2{}^2 S_1 + b'S_2{}^3 - b'S_1{}^3$$

ou soit:

$$S_{1c} = S_1 + aS_2 + b\,(S_1 - S_2)^3 + c\,(S_1 - S_2)$$

et

$$S_{2c} = S_2 + a'S_1 + b'\,(S_2 - S_1)^3 + c'\,(S_2 - S_1)$$

**5.** Dispositif selon la revendication 3, **caractérisé en ce que** les moyens de traitement (**M**) délivrent pour chaque capteur magnétique de mesure (**$1_1$, $1_2$**), un signal de mesure corrigé tel que pour un ordre de correction n = 1, les valeurs de $\alpha$, $\alpha'$, i, j sont tels que ($\alpha_{10}$ = a, $\alpha_{11}$ = a' et $\alpha'_{10}$ = a', $\alpha'_{11}$ = 1 de sorte que :

$$S_{1c} = S_1 + a\,S_2 \ , \quad \text{et} \quad S_{2c} = S_2 + a'S_1$$

**6.** Dispositif selon l'une des revendications 1 à 5, **caractérisé en ce que** chaque signal de mesure $S_1$, $S_2$ est tel que

$$S_1 \ = \frac{S_a - S_b}{S_a + S_b}$$

$$S_2 = \frac{S_d - S_c}{S_d + S_c}$$

avec $S_a$, $S_b$, et $S_c$, $S_d$, un couple de signaux élémentaires de mesure délivrés par une paire de cellules de mesure montées dans le circuit magnétique ouvert.

**7.** Installation de mesure **caractérisée en ce qu'**elle comporte :

- un premier capteur magnétique de mesure (**$1_1$**) délivrant un premier signal de mesure (**$S_1$**) de la position d'un premier mobile (**$2_1$**) évoluant selon une trajectoire de déplacement (**$T_1$**), la valeur du premier signal de mesure (**$S_1$**) dépendant de la position dudit mobile dans un circuit magnétique ouvert (**$3_1$**),
- au moins un deuxième capteur magnétique de mesure (**$1_2$**) délivrant un deuxième signal magnétique de mesure (**$S_2$**) de la position d'un deuxième mobile (**$2_2$**) évoluant selon une trajectoire de déplacement (**$T_2$**) voisine de la trajectoire de déplacement (**$T_1$**) du premier mobile, la valeur du deuxième signal de mesure (**$S_2$**) dépendant de la position dudit mobile dans un circuit magnétique ouvert (**$3_2$**),
- et un dispositif de correction conforme à l'une des revendications 1 à 6.

**8.** Installation de mesure selon la revendication 7, **caractérisée en ce que** chaque capteur magnétique de mesure (**$1_1$, $1_2$**) comporte des moyens de création d'un flux magnétique (**$4_1$, $4_2$**) selon une direction perpendiculaire à la surface (**$5_1$, $5_2$**) d'au moins une pièce polaire à partir de laquelle apparaît un flux magnétique de fuite dont l'intensité varie à la surface de la pièce polaire selon l'axe de déplacement, ces moyens de création d'un flux magnétique (**$4_1$, $4_2$**) étant montés déplaçables par le mobile en délimitant au moins un entrefer (**$8_1$, $8_2$**) avec une pièce polaire faisant partie du circuit magnétique ouvert, chaque capteur magnétique de mesure comportant au moins une cellule de mesure (**$11_1$, $11_2$**) montée de manière fixe dans le circuit magnétique à proximité d'un point extrême de la trajectoire de déplacement de manière à mesurer le flux magnétique délivré par les moyens de création diminués d'un flux magnétique de fuite apparaissant à partir de la pièce polaire et variant selon la trajectoire de déplacement.

**9.** Installation de mesure selon la revendication 7 ou 8, **caractérisée en ce que** les moyens de création d'un flux magnétique (**$4_1$, $4_2$**) des deux capteurs de mesure sont montés à proximité selon des trajectoires de déplacement parallèles.

**10.** Installation de mesure selon la revendication 8, **caractérisée en ce que** chaque capteur magnétique de mesure ($1_1$, $1_2$) comporte une deuxième cellule de mesure ($13_1$, $13_2$) montée de manière fixe dans le circuit magnétique ($3_1$, $3_2$) à proximité de l'autre point extrême de déplacement de manière à mesurer le flux magnétique délivré par les moyens de création ($4_1$, $4_2$) diminué du flux magnétique de fuite.

**11.** Installation de mesure selon la revendication 8, **caractérisée en ce que** les moyens de création d'un flux magnétique ($4_1$, $4_2$) sont montés déplaçables en translation.

**12.** Installation de mesure selon la revendication 11, **caractérisée en ce que** les moyens de création d'un flux magnétique ($4_1$, $4_2$) sont constitués par un élément de forme annulaire ou de disque ($14_1$, $14_2$) aimanté radialement ou axialement dont l'axe est parallèle à l'axe de déplacement en translation.

**13.** Installation de mesure selon la revendication 11, **caractérisée en ce que** les moyens de création d'un flux magnétique sont constitués par une série d'au moins quatre aimants ($15_1$, $15_2$) dont les directions d'aimantation sont décalées deux à deux de 90°.

**14.** Installation de mesure selon l'une des revendications 11 à 13, **caractérisée en ce que** le circuit magnétique ouvert ($3_1$, $3_2$) comporte une deuxième pièce polaire ($18_1$, $18_2$) disposée en regard de la première pièce polaire ($5_1$, $5_2$) en délimitant avec cette dernière un entrefer ($19_1$, $19_2$).

**15.** Installation de mesure selon la revendication 14, **caractérisée en ce que** la deuxième pièce polaire ($18_1$, $18_2$) est pourvue des moyens de création du flux magnétique ($4_1$, $4_2$).

**16.** Installation de mesure selon la revendication 14, **caractérisée en ce que** la deuxième pièce polaire ($18_1$, $18_2$) est formée par un élément tubulaire équipé de l'élément annulaire aimanté radialement ($14_1$, $14_2$).

**17.** Installation de mesure selon la revendication 13, **caractérisée en ce que** l'une ou l'autre des pièces polaires ($5_1$, $18_1$ - $5_2$, $18_2$) possède(nt) un profil plan adapté pour améliorer la linéarité du signal de sortie délivré par les cellules de mesure ($11_1$, $13_1$ - $11_2$, $13_2$).

**Claims**

**1.** - A device to correct interference errors in a measuring installation (A), that includes:

• at least two magnetic sensors ($1_1$, $1_2$) for measuring the position of mobile elements ($2_1$, $2_2$) that are moving along adjacent trajectories, where each magnetic measuring sensor ($S_1$, $S_2$) delivers a measurement signal that is representative of the position of the mobile element in an open magnetic circuit ($3_1$, $3_2$),
• and resources (M) for processing the measurement signals delivered by the magnetic measuring sensors,

**characterised in that** the processing resources (M) include resources for correction of the magnetic measurement signals in order to take account of interference errors between the adjacent magnetic sensors ($1_1$, $1_2$) with a view to obtaining a corrected measurement signal ($S_{1c}$, $S_{2c}$) for each magnetic measuring sensor.

**2.** - A device according to claim 1, **characterised in that** the correction resources correct the measurement signal ($S_1$, $S_2$) of each magnetic measuring sensor ($1_1$, $1_2$) according to the value of the measurement signals of the magnetic measuring sensor concerned and of the other magnetic measuring sensors.

**3.** - A device according to claim 1 or 2, **characterised in that** the processing resources (M) deliver a corrected measurement signal for each magnetic measuring sensor such that:

$$S_{1c} = \sum_{i-1}^{n} \left( \sum_{j=0}^{i} \alpha_{ij} S_1^j S_2^{i-j} \right)$$

$$S_{2c} = \sum_{i=1}^{n}\left( \sum_{j=0}^{i} \alpha'_{ij} S_2^{j} S_1^{i-j} \right)$$

where $\alpha$, $\alpha'$ are correction coefficients
and n is the correction order.

4. - A device according to claim 3, **characterised in that**, for each magnetic measuring sensor ($1_1$, $1_2$), the processing resources (M) deliver a corrected measurement signal such that for a correction order of n = 3, $\alpha$, i, j and $\alpha'$ are such that:

$\alpha_{10}$ = a-c , $\alpha_{11}$ = 1+c
$\alpha'_{10}$ = a'-c' , $\alpha'_{11}$ = 1+c'
$\alpha_{20}$ = 0 = $\alpha'_{20}$, $\alpha_{21}$ = $\alpha'_{21}$ = 0 , $\alpha_{22}$ = $\alpha'_{22}$ = 0
$\alpha_{30}$ = -b , $\alpha_{31}$ = 3b , $\alpha_{32}$ = -3b , $\alpha_{33}$ = b
$\alpha'_{30}$ = -b' , $\alpha'_{31}$ = 3b' , $\alpha'_{32}$ = -3b', $\alpha'_{33}$ = b'
where a, b, c, a', b', c' are correction coefficients so that:

$$S_{1c} = (1 + c)S_1 + (a - c)S_2 + 3bS_1 S_2^2 - 3bS_1^2 S_2 + bS_1^3 - bS_2^3$$

$$S_{2c} = (1 + c')S_2 + (a' - c')S_1 + 3b'S_2S_1^2 - 3b'S_2^2S_1 + b'S_2^3 - b'S_1^3$$

or

$$S_{1c} = S_1 + aS_2 + b(S_1 - S_2)^3 + c(S_1 - S_2)$$

and

$$S_{2c} = S_2 + a'S_1 + b'(S_2 - S_1)^3 + c'(S_2 - S_1)$$

5. - A device according to claim 3, **characterised in that**, for each magnetic measuring sensor ($1_1$, $1_2$), the processing resources (M) deliver a corrected measurement signal such that, for a correction order of n = 1, the values of $\alpha$, $\alpha'$, i, and j are such that: $\alpha_{10}$ = a, $\alpha_{11}$ = a' and $\alpha'_{10}$ = a', $\alpha'_{11}$ = 1 so that:

$$S_{1c} = S_1 + aS_2, \text{ and } S_{2c} = S_2 + a'S_1$$

6. - A device according to one of claims 1 to 5, **characterised in that** each measurement signal $S_1$, $S_2$ is such that:

$$S_1 = \frac{S_a - S_b}{S_a + S_b}$$

$$S_2 = \frac{S_d - S_c}{S_d + S_c}$$

where $S_a$, $S_b$, and $S_c$, $S_d$ are a pair of elementary measurement signals delivered by a pair of measurement cells mounted in the open magnetic circuit.

**7.** - A measuring installation **characterised in that** it includes

- a first magnetic measuring sensor ($1_1$) delivering a first measurement signal ($S_1$) for the position of a first mobile element ($2_1$) that is moving along a trajectory ($T_1$), where the value of the first measurement signal ($S_1$) depends on the position of the said mobile element in an open magnetic circuit ($3_1$),
- at least one second magnetic measuring sensor ($1_2$) delivering a second magnetic measurement signal ($S_2$) for the position of a second mobile element ($2_2$) that is moving along a trajectory ($T_2$) adjacent to the movement trajectory ($T_1$) of the first mobile element, where the value of the second measurement signal ($S_2$) depends on the position of the said mobile element in an open magnetic circuit ($3_2$)
- and a correction arrangement according to one of claims 1 to 6.

**8.** - A measuring installation according to claim 7, **characterised in that** each magnetic measuring sensor ($1_1$, $1_2$) includes resources ($4_1$, $4_2$) for the creation of a magnetic flux in a direction perpendicular to the surface ($5_1$, $5_2$) of at least one polar part from which there emanates a magnetic leakage flux whose strength varies with the surface area of the polar part along the movement axis, where these magnetic flux creation resources ($4_1$, $4_2$) are mounted to be movable by the mobile element, forming at least one magnetic gap ($8_1$, $8_2$) with a polar part forming part of the open magnetic circuit, with each magnetic measuring sensor including at least one measuring cell ($11_1$, $11_2$) mounted in a fixed manner in the magnetic circuit close to an end point of the trajectory so as to measure the magnetic flux delivered by the creation resources less a magnetic leakage flux appearing from the polar part and varying along the trajectory.

**9.** - A measuring installation according to claim 7 or 8, **characterised in that** the magnetic flux creation resources ($4_1$, $4_2$) of the two measuring sensors are mounted close to each other along parallel trajectories.

**10.** - A measuring installation according to claim 8, **characterised in that** each magnetic measuring sensor ($1_1$, $1_2$) includes a second measuring cell ($13_1$, $13_2$) mounted in a fixed manner in the magnetic circuit ($3_1$, $3_2$) close to the other trajectory end point, so as to measure the magnetic flux delivered by the creation resources ($4_1$, $4_2$) less the magnetic leakage flux.

**11.** - A measuring installation according to claim 8, **characterised in that** the magnetic flux creation resources ($4_1$, $4_2$) are mounted to be movable in translation.

**12.** - A measuring installation according to claim 11, **characterised in that** the magnetic flux creation resources ($4_1$, $4_2$) are composed of a radially or axially magnetised disk-shaped or annular element ($14_1$, $14_2$) whose axis is parallel to the movement axis in translation.

**13.** - A measuring installation according to claim 11, **characterised in that** the magnetic flux creation resources are composed of a series of at least four magnets ($15_1$, $15_2$) whose directions of magnetisation are shifted, two by two, by 90°.

**14.** - A measuring installation according to one of claims 11 to 13, **characterised in that** the open magnetic circuit ($3_1$, $3_2$) includes a second polar part ($18_1$, $18_2$) placed opposite the first polar part ($5_1$, $5_2$) forming, together with the latter, a magnetic gap ($19_1$, $19_2$).

**15.** - A measuring installation according to claim 14, **characterised in that** the second polar part ($18_1$, $18_2$) is equipped with resources for creation of the magnetic flux ($4_1$, $4_2$).

**16.** - A measuring installation according to claim 14, **characterised in that** the second polar part ($18_1$, $18_2$) is formed by a tubular element fitted with the radially magnetised annular element ($14_1$, $14_2$).

**17.** - A measuring installation according to claim 13, **characterised in that** one or the other of the polar parts ($5_1$, $18_1$ - $5_2$, $18_2$) has a plane profile designed to improve the linearity of the output signal delivered by the measurement cells ($11_1$, $13_1$ - $11_2$, $13_2$).

**Patentansprüche**

**1.** Vorrichtung zum Korrigieren der Interferenzfehler für eine Meßeinrichtung (A), umfassend:

- wenigstens zwei Magnetsensoren ($1_1$, $1_2$) zur Messung der Position von sich bewegenden Teilen ($2_1$, $2_2$), die sich entlang von benachbarten Bewegungsbahnen entwickelt, wobei jeder Magnetsensor zur Messung ($S_1$, $S_2$) ein Meßsignal liefert, das für die Position des sich bewegenden Teils in einem offenen Magnetkreis ($3_1$, $3_2$) repräsentativ ist,

- und Bearbeitungsmittel (M) der Meßsignale, die von den Magnetsensoren zur Messung geliefert werden,

**dadurch gekennzeichnet, daß** die Bearbeitungsmittel (M) Mittel zur Korrektur der Magnetmeßsignale umfassen, um Interferenzfehler zwischen den benachbarten Magnetsensoren ($1_1$, $1_2$) im Hinblick darauf zu berücksichtigen, ein korrigiertes Meßsignal ($S_{1c}$, $S_{2c}$) für jeden Magnetsensor zur Messung zu erhalten.

2. Vorrichtung nach Anspruch 1, **dadurch gekennzeichnet, daß** die Mittel zur Korrektur das Meßsignal ($S_1$, $S_2$) jedes Magnetsensors ($1_1$, $1_2$) zur Messung in Abhängigkeit des Wertes der Meßsignale des betreffenden Magnetsensors zur Messung und der anderen Magnetsensoren zur Messung korrigieren.

3. Vorrichtung nach Anspruch 1 oder 2, **dadurch gekennzeichnet, daß** die Bearbeitungsmittel (M) für jeden Magnetsensor zur Messung ein Meßsignal liefern, das so korrigiert ist, daß:

$$S_{1c} = \sum_{i-1}^{n} \left( \sum_{j=0}^{i} \alpha_{ij} \, S_1^{\,j} \, S_2^{\,i-j} \right)$$

$$S_{2c} = \sum_{i=1}^{n} \left( \sum_{j=0}^{i} \alpha'_{ij} \, S_2^{\,j} \, S_1^{\,i-j} \right)$$

mit: a, a' : Korrekturkoeffizienten
und n: Ordnung der Korrektur.

4. Vorrichtung nach Anspruch 3, **dadurch gekennzeichnet, daß** die Bearbeitungsmittel (M) für jeden Magnetsensor zur Messung ($1_1$, $1_2$) ein korrigiertes Meßsignal derart liefern, daß für eine Korrektur der Ordnung n = 3 die a, i, j und a' so sind daß:
$\alpha_{10} = a\text{-}c$ , $\alpha_{11} = 1\text{+}c$
$\alpha'_{10} = a'\text{-}c'$ , $\alpha'_{11} = 1\text{+}c'$
$\alpha_{20} = 0 = \alpha'_{20}$ , $\alpha_{21} = \alpha'_{21} = 0$ , $\alpha_{22} = \alpha'_{22} = 0$
$\alpha_{30} = -\,b$ , $\alpha_{31} = 3b$ , $\alpha_{32} = -\,3b$ , $\alpha_{33} = b$
$\alpha'_{30} = -\,b'$ , $\alpha'_{31} = 3b'$ , $\alpha'_{32} = -\,3b'$ , $\alpha'_{33} = b'$
mit a, b, c, a', b', c': Korrekturkoeffizienten, derart, daß:

$$S_{1c} = (1 + c)\,S_1 + (a - c)\,S_2 + 3bS_1 S_2^{\,2} - 3bS_1^{\,2} S_2 + bS_1^{\,3} - bS_2^{\,3}$$

$$S_{2c} = (1 + c')\,S_2 + (a' - c')\,S_1 + 3b'S_2 S_1^{\,2} - 3b'S_2^{\,2} S_1 + b'S_2^{\,3} - b'S_1^{\,3}$$

oder daß:

$$S_{1c} = S_1 + aS_2 + b\,(S_1 - S_2)^3 + c\,(S_1 - S_2)$$

und

$$S_{2c} = S_2 + a'S_1 + b'\,(S_2 - S_1)^3 + c'\,(S_2 - S_1)$$

**5.** Vorrichtung nach Anspruch 3, **dadurch gekennzeichnet, daß** die Bearbeitungsmittel (M) für jeden Magnetsensor zur Messung ($1_1$, $1_2$) ein korrigiertes Meßsignal derart liefern, daß für einen Korrekturrang n = 1, die Werte von a, a', i, j, so sind daß a 10 = a, $a_{11}$ = a' und $a'_{10}$ = a', $a_{11}$ = 1 derart, daß:

$$S_{1c} = S_1 + aS_2 \quad \text{und} \quad S_{2c} = S_2 + a'S_1$$

**6.** Vorrichtung nach einem der Ansprüche 1 bis 5, **dadurch gekennzeichnet, daß** jedes Meßsignal $S_1$, $S_2$ so ist daß

$$S_1 \;=\; \frac{S_a - S_b}{S_a + S_b}$$

$$S_2 \;=\; \frac{S_d - S_c}{S_d + S_c}$$

mit $S_a$, $S_b$ und $S_c$, $S_d$ einem Elementarsignalpaar zur Messung, das geliefert wird durch ein Paar von Meßzellen, die in dem offenen Magnetkreis angebracht sind.

**7.** Einrichtung zur Messung, **dadurch gekennzeichnet, daß** sie umfaßt:

- einen ersten Magnetsensor zur Messung ($1_1$), der ein Meßsignal ($S_1$) der Position eines ersten sich bewegenden Teils ($2_1$) liefert, die sich gemäß einer Bewegungsbahn ($T_1$) entwickelt, wobei der Wert des ersten Meßsignals (S1) von der Position des sich bewegenden Teils in einem offenen Magnetkreis ($3_1$) abhängt,
- wenigstens einen zweiten Magnetsensor zur Messung ($1_2$), der ein zweites Magnetmeßsignal ($S_2$) der Position eines zweiten sich bewegenden Teils ($2_2$) liefert, die sich gemäß einer Bewegungsbahn ($T_2$) nahe der Bewegungsbahn ($T_1$) des ersten sich bewegenden Teils entwickelt, wobei der Wert des zweiten Meßsignals ($S_2$) von der Position des sich bewegenden Teils in einem offenen Magnetkreis ($3_2$) abhängt,
- und eine Korrekturvorrichtung gemäß einem der Ansprüche 1 bis 6.

**8.** Meßeinrichtung nach Anspruch 7, **dadurch gekennzeichnet, daß** jeder Magnetsensor zur Messung ($1_1$, $1_2$) Mittel zur Erzeugung eines Magnetflusses ($4_1$, $4_2$) in einer Richtung senkrecht zur Oberfläche ($5_1$, $5_2$) von wenigstens einem polaren Teil umfaßt, von welchem ein Magnetflußverlust auftritt, dessen Intensität an der Oberfläche des polaren Teils gemäß der Bewegungsachse variiert, wobei diese Mittel zur Erzeugung eines Magnetflusses ($4_1$, $4_2$) durch das sich bewegende Teil bewegbar unter Begrenzung wenigstens eines Spaltes ($8_1$, $8_2$) mit einem polaren Teil angebracht sind, das einen Teil des offenen Magnetkreises bildet, wobei jeder Magnetsensor zur Messung wenigstens eine Meßzelle ($11_1$, $11_2$) umfaßt, die in dem Magnetkreis in der Nähe eines Extrempunktes der Bewegungsbahn derart fest angebracht ist, daß der Magnetfluß gemessen wird, der von den Erzeugungsmittel geliefert wird, die um einen Magnetflußverlust abgeschwächt sind, welcher von dem polaren Teil her auftritt und gemäß der Bewegungsbahn variiert.

**9.** Meßeinrichtung nach Anspruch 7 oder 8, **dadurch gekennzeichnet, daß** die Mittel zur Erzeugung eines Magnetflusses ($4_1$, $4_2$) der beiden Meßsensoren in der Nähe in parallelen Bewegungsbahnen angebracht sind.

**10.** Meßeinrichtung nach Anspruch 8, **dadurch gekennzeichnet, daß** jeder Magnetsensor zur Messung ($1_1$, $1_2$) eine zweite Meßzelle ($13_1$, $13_2$) umfaßt, die fest in dem Magnetkreis ($3_1$, $3_2$) in der Nähe des anderen Bewegungsextrempunktes derart angebracht ist, daß der Magnetfluß gemessen wird, der von den Erzeugungsmittel ($4_1$, $4_2$)

geliefert wird und um den Magnetflußverlust abgeschwächt ist.

11. Meßeinrichtung nach Anspruch 8, **dadurch gekennzeichnet, daß** die Mittel zur Erzeugung eines Magnetflusses $(4_1, 4_2)$ translationsbeweglich angebracht sind.

12. Meßeinrichtung nach Anspruch 11, **dadurch gekennzeichnet, daß** die Mittel zur Erzeugung eines Magnetflusses $(4_1, 4_2)$ aus einem ring- oder scheibenförmigen radial oder axial magnetischen Element bestehen, dessen Achse parallel zur Translationsbewegungsachse ist.

13. Meßeinrichtung nach Anspruch 11, **dadurch gekennzeichnet, daß** die Mittel zur Erzeugung eines Magnetflusses aus einer Reihe von wenigstens vier Magneten $(15_1, 15_2)$ bestehen, deren Magnetrichtungen paarweise um 90° versetzt sind.

14. Meßeinrichtung nach einem der Ansprüche 11 bis 13, **dadurch gekennzeichnet, daß** der offene Magnetkreis $(3_1, 3_2)$ ein zweites polares Teil $(18_1, 18_2)$ umfaßt, das gegenüber dem ersten polaren Teil $(5_1, 5_2)$ unter Begrenzung eines Spaltes $(19_1, 19_2)$ mit diesem letzteren angeordnet ist.

15. Meßeinrichtung nach Anspruch 14, **dadurch gekennzeichnet, daß** das zweite polare Teil $(18_1, 18_2)$ mit Mitteln zur Erzeugung eines Magnetflusses $(4_1, 4_2)$ versehen ist.

16. Meßeinrichtung nach Anspruch 14, **dadurch gekennzeichnet, daß** das zweite polare Teil $(18_1, 18_2)$ aus einem rohrförmigen Element gebildet ist, das mit einem radial ringförmigen magnetischen Element $(14_1, 14_2)$ versehen ist.

17. Meßeinrichtung nach Anspruch 13, **dadurch gekennzeichnet, daß** das eine oder andere der polaren Teile $(5_1, 18_1 - 5_2, 18_2)$ ein ebenes Profil besitzt, das ausgelegt ist, um die Linearität des Ausgangssignals zu verbessern, das von den Meßzellen $(11_1, 13_1 - 11_2, 13_2)$ geliefert wird.

FIG.1

FIG.2

FIG.3

FIG.4

FIG.5

FIG.6

FIG.7

FIG.8

FIG.9

FIG.10

FIG.11

**EP 1 676 098 B1**

## RÉFÉRENCES CITÉES DANS LA DESCRIPTION

**Documents brevets cités dans la description**

- US 4810965 A